# EUROPEAN PATENT APPLICATION

(11) **EP 2 180 352 A1**
(43) Date of publication of application: **28.04.2010**
(21) Application number: 08777833.8
(22) Date of filing: 03.07.2008
(51) Int. Cl.: G02B 1/04, C08K 9/04, C08L 101/00

(54) **RESIN MATERIAL FOR OPTICAL USE AND OPTICAL DEVICE**

(30) Priority: 23.08.2007 JP 2007216851
(71) Applicant: Konica Minolta Opto, Inc., Hachioji-shi, Tokyo 192-8505 (JP)
(72) Inventor: TAIMA, Yasuo, Hino-shi Tokyo 191-8511 (JP)
(74) Representative: Henkel, Feiler & Hänzel
(86) International application number: PCT/JP2008/062081
(87) International publication number: WO 2009/025127

(57) **Abstract**

Disclosed is a resin material for optical use, which has refractive index and transparency suitable for optical devices, while having extremely small change in refractive index dependent on temperature. In addition, the resin material for optical use is excellent in forming suitability and heat resistance after a reflow process. Also disclosed is an optical device using a resin material for optical use. Specifically disclosed is a transparent resin material for optical use which is composed of a curable resin containing inorganic fine particles whose surfaces are modified with an organic compound. This transparent resin material for optical use is **characterized in that** the inorganic fine particles are composed of an amorphous silica containing a metal oxide crystal, and have an average particle diameter of not less than 1 nm but more than 50 nm.

## Description

### TECHINICAL FIELD

The present invention relates to resin material for optical use and an optical device, particularly relates to optical resin material to be suitably used for lenses, filters, gratings, optical fibers and flat plate light conductor and an optical device using that.

### TECHNICAL BACKGROUND

As the optical device capable of attaining a desired optical function by light transmission, optical lenses and compensation elements are cited. Examples of those include an optical device to be used in image taking apparatuses such as silver salt photographic cameras, digital cameras and a medical image taking apparatuses, optical systems of light-pickup apparatus and those to be used in light information modules. Optical devices made from glass or plastic are usually used for such the uses.

Particularly, the optical device made from plastic can be formed by injection formation or extrusion formation and the formation can be carried out at a relative low temperature. Therefore, the plastic optical device can be produced with cost lower than that of the glass optical device and plastic-made optical device exchangeable to the glass-made optical device is strongly demanded.

Hitherto, as the optical device to be used in the optical system such as the image taking optical system and the light pickup, optical devices using thermoplastic resin is widely known. For instance, a copolymer of cyclic olefin and α-olefin is proposed as the thermoplastic resin suitable for the optical device of the light pickup apparatus; cf. Patent Document 1, for example.

However, the optical device using the thermoplastic resin is lower in the heat resistivity compared with the glass optical device and the optical property thereof is varied sometimes when the device is exposed to high temperature. Therefore, a problem is caused sometimes when such the device is used as the optical device in the optical apparatus requiring high optical precision such as the optical device of the image taking optical system and that of the light pickup apparatus. Furthermore, the image taking optical system is probably exposed to various environments according to the image taking conditions and the light pickup apparatus is exposed in some cased to high temperature caused by the driving of the apparatus for tracking and focusing.

Moreover, the lens is exposed to high temperature of about 260 °C when the device in which the lens is integrated is passed through a solder reflowing process in the production process of the image taking apparatus. Therefore, higher heat resistivity is required.

The thermoplastic resin has a drawback such as that the formed lens is easily deformed by heat, though the resin has good processing suitability since it is soften or melted at relatively low temperature. Consequently, thermally curable resin such as silicone resin is investigated as another plastic material to be used for the optical lens; cf. Patent Document 2, for example. However, any resin satisfying the forming suitability and the heat resistivity for using as the optical lens is not found yet.

Besides, a resin material containing inorganic particles is investigated for raising the rigidity of the curable resin; cf. Patent Document 3, for example. Moreover, a method is disclosed in which nano-particles of a composite metal oxide prepared by a sol-gel method are dispersed in the resin for making compatibility of the rigidity and the transparency of the resin; cf. Patent Documents 4 and 5, for example.
Patent Document 1: Japanese Patent Application Laid-Open Publication No. 2002-105131
Patent Document 2: Japanese Patent Application Laid-Open Publication No. 2004-146554
Patent Document 3: Japanese Patent Application Laid-Open Publication No. 11-343349
Patent Document 4: Japanese Patent Application Laid-Open Publication No. 2004-292698
Patent Document 5: Japanese Patent Application Laid-Open Publication No. 2005-146042

### DISCLOSURE OF THE INVENTION

### PROBLEMS TO BE SOLVED BY THE INVENTION

However, the properties such as the formation suitability and the heat resistivity are not considered in the method described in Patent Documents 4 and 5. The resin materials produced by the method described in these documents do not give sufficient properties since the materials are suffered deformation, coloring and lowering in the transparency by coagulation of the particles under a high temperature condition such as the solder reflowing process.

The present invention is attained on such the background, and objects of the invention are to provide an optical resin material which has suitable refractive index and transparency, and very small thermally variation in the refractive index, and is excellent in the forming suitability and heat resistivity and inhibited in the degradation in the optical properties in the solder reflowing process, and to provide an optical device using the resin material.

### MEANS FOR SOLVING THE PROBLEMS

The above objects of the invention are attained by the following constitution.
1. A transparent optical resin material comprising a curable resin containing an inorganic particle surface-modified by an organic compound, wherein the inorganic particle comprises amorphous silica containing a metal oxide crystal and has a diameter of from 1 nm to 50 nm.
2. The optical resin material described in the above 1, wherein the inorganic fine particles have substantially homogeneous composition.
3. The optical resin material described in the above 1 or 2, wherein the average refractive index of the fine organic particle is within the range of from 1.5 to 1.7.
4. The optical resin material described in any one the above 1 to 3, wherein the organic compound is an organic silane compound.
5. An optical device formed by using the optical resin material described in any one of the above 1 to 4.

### EFFECTS OF THE INVENTION

The optical resin material having high light transparency and thermal stability can be obtained by the invention by dispersing the inorganic fine particles comprising the amorphous silica containing the metal oxide crystals. In the optical device using the formed product of the optical resin material, the light transparency is high and the thermal dependency of the refractive index is small and the degradation of the optical properties in the solder reflowing process can be inhibited.

### BRIEF DESCRIPTION OF THE DRAWINGS

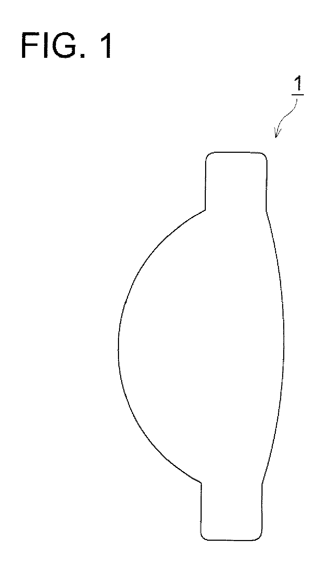

Fig. 1 shows a cross section of the optical device relating to a preferred embodiment of the invention.

### DESCRIPTION OF THE SYMBOL

1: Optical device

### PREFERRED EMBODIMENT OF THE INVENTION

The optical resin material of the invention is firstly described.

The optical resin material of the invention contains a curable resin and inorganic fine particles and is suitable for formed into an optical element such as an optical resin lens.

In the followings, (1) the inorganic fine particles, (2) the curable resin, (3) production of the optical device and (4) properties of the optical resin material, are described.

### (1) Inorganic fine particles

The inorganic fine particles to be used in the invention are **characterized in that** the inorganic fine particles comprise amorphous silica SiO₂ as an oxide which contains a metal oxide crystal. When the inorganic fine particles are subjected to infrared spectrum analysis, the presence of silica is confirmed by an absorption peak near 1,070 to 1,120 cm⁻¹. The "amorphous" means a state in which clear crystalline structure is not found by a crystal structure analyzing means such as X-ray diffraction or electron ray diffraction. Namely, the inorganic fine particles relating to the invention are **characterized in that** the particle is a mixture composition of silica and the metal oxide in the composition analysis and the crystalline structure of the metal oxide is only detected in the structure analysis.

As the method for analyzing the composition of the inorganic fine particles, usually known various methods such as X-ray fluorescence analyzing method and electron-ray micro analyzer can be applied.

The metal oxide to be contained in the inorganic fine particles is not specifically limited as long as that is detectable as the metal oxide crystal in the amorphous silica. The metal constituting the metal oxide can be selected from Li, Na, Mg, Al, K, Ca, Sc, Ti, V, Cr, Fe, Co, Ni, Cu, Zn, Rb, Sr, Y, Nb, Zr, Mo, Ag, Cd, In, Sn, Sb, Cs, Ba, La, Ta, Hf, W, Ir, Tl, Pb and Bi.

In the invention, the metal oxide existing in the amorphous silica may be entirely in the crystal state or in a state in which a part of the metal oxide is amorphous metal oxide.

The composition of the metal oxide may be a metal oxide crystal composed of one kind of metal, a composite metal oxide crystal containing plural kinds of metal or a crystal composed of silicon and another metal atom such as a sodium silicate crystal and a magnesium silicate crystal, as long as the crystal structure is confirmed.

The inorganic fine particles preferably have substantially homogeneous in the composition thereof. Here, "substantially homogeneous composition" means that the metal oxide crystals in the amorphous silica are about homogeneously dispersed in the particle. For instance, the variation of the compositions measured by TEM-EDX at ten points on the cross section of the particle is within the range of 10%, and preferably 5%.

Such the inorganic particle having the substantially homogeneous composition is preferred since no light scattering is caused by the composition distribution in the particle so that high transparency and refractive index uniformity is obtained. Moreover, it is preferable that the metal oxide crystal is dispersed in the amorphous silica in a state of fine crystalline particle, namely fine particle having a diameter of not more than 5 nm or a detectable cluster composed of several to several tens atoms.

The content of the metal oxide contained in the amorphous silica in the inorganic fine particles is preferably from 20% to 80% by weight and more preferably from 20% to 60% by weight, though the content can be optionally decided depending on the kind of the metal oxide and the refractive index of the inorganic fine particles to be produced.

The difference of the refractive index between the inorganic fine particles and the curable resin is preferably small. As a result of the investigation by the inventors, it is found that the scattering of light transmitting through the material is difficultly caused and the optical resin material having high transparency can be obtained when the difference between the refractive index of the curable resin and that of the inorganic fine particles dispersed in the curable resin is small. Light scattering on the occasion of transmitting light through the resin material is increased accompanied with increasing of the size of the inorganic fine particles. However, it is found that the frequency of occurrence of scattering is lowered even if the inorganic particles having relatively large particle size are used when the difference of the refractive index between the resin and the inorganic fine particles is small, and the transparency can be maintained even when the content of the inorganic fine particles is increased.

Therefore, the difference of the refractive index between the inorganic fine particles and the curable resin is preferably not more than 0.15, more preferably not more than 0.1, and further preferably not more than 0.05.

The refractive index of the inorganic fine particles is preferably from 1.5 to 1.75, more preferably from 1.5 to 1.65, because the refractive index of the curable resin is usually within the range of from 1.5 to 1.6, even though the refractive index of the inorganic fine particle satisfying is different depending on the resin composition of the curable resin.

For attaining the above preferable refractive index of the inorganic fine particles comprising the amorphous silica containing the metal oxide crystal, it is preferable to homogeneously disperse the metal oxide having a refractive index of from 1.6 to 2.1 in the amorphous silica. In concrete, metal oxides such as zinc oxide, aluminum oxide, zirconium oxide, tantalum oxide, magnesium oxide, calcium oxide, yttrium oxide, barium oxide and indium oxide are preferably exemplified. One not causing any absorption, light emission and fluorescent light emission within the wavelength range to be used in the optical device is suitably selected from the above-mentioned.

It is preferable in the invention that the optical resin material, in which the inorganic fine particles are dispersed, has light transmittance usable as the optical device and is controlled so that the refractive index nd25 measured by D-ray of sodium at 25 °C is within the range of from 1.5 to 1.7.

The refractive index corresponds to that measured by an Abbe refractometer according to ASTM D542 Standard, and the values described in various documents can be applied. Moreover, the refractive index of the inorganic fine particles can be confirmed by the method in which the particles are dispersed in various solvents each controlled so as to respectively has a refractive index different from each other, and the light absorbance of the resultant dispersions are measured and the refractive index of the solvent giving the dispersion having the lowest absorbance is determined as the refractive index of the particle.

Matters preferably to be considered on the occasion of selecting the inorganic fine particles are described below.

The inorganic fine particles may be used singly or in combination of plural kinds as long as the light transparency is not degraded. The required properties can be improved with higher efficiency by the use of plural kinds of inorganic fine particles different in the properties from each other.

The average diameter of the inorganic fine particles is preferably from 1 nm to 50 nm, more preferably from 1 nm to 20 nm, and further preferably from 1 nm to 10 nm. The average diameter is preferably not less than 1 nm since anxiety that the desired properties cannot be obtained is caused when the average diameter is less than 1 nm. The average diameter is preferably not more than 50 nm since anxiety that the transparency is degraded by less than 80% by turbid of the curable material composition is caused when the average diameter exceeds 50 nm. Here, the "average particle diameter" is the volume average of the diameter of spheres each having the same volume as the respective particles.

The shape of the inorganic fine particles is preferably spherical though the shape is not specifically limited. Concretely, it is preferable that the ratio of the minimum diameter (the minimum value of distance between the two tangential lines touching the circumstance of the particle) to the maximum diameter (the maximum value of distance between the two tangential lines touching the circumstance of the particle) of the particle is preferably from 0.5 to 1.0, and more preferably from 0.7 to 1.0.

The particles having relatively narrower distribution is suitably used than that having wide distribution though the distribution of the particle is not specifically limited. The particles having variation coefficient (the value of the standard deviation divided by the averaged value as the index of scattering of the measured values; dimensionless value) is preferably not more than 30, particularly not more than 10 since the light transmittance is degraded by the presence of particles having a diameter of 100 nm or more even when the number of such the particle is small.

### (1.1) Production method and surface modification of the inorganic fine particles

The method for producing the inorganic fine particles is not specifically limited, and any known methods can be applied as long as the method can produce the inorganic fine particles comprising the amorphous silica containing the metal oxide crystal therein. As the method for producing the composite oxide particle, a thermal decomposition method (a method for fine particle by decomposing a raw material by heating), a spray drying method, a flame spraying method, a plasma method, a gas phase reaction method, a freeze drying method, a heating kerosene method, a heating petroleum method, a precipitation method (co-precipitation method), a hydrolysis method (salt solution method, alkoxide method and sol-gel method) and a water heating method (precipitation method, crystallization method, water heating decomposition method and water heating oxidation method) are usually cited.

Among these methods, a fine particle having homogeneous composition and small diameter can be produced by the method for producing the composite oxide compound in a liquid such as the water heating method. However, the formation of the metal oxide crystal in the amorphous silica of the invention is difficult by such the method. Therefore, it is necessary to perform the particle formation in the presence of previously prepared fine metal oxide crystals. In the water heating method, some problems are caused in the composition control of the composite oxide particles and the formation of fine particle.

Therefore, the thermal decomposition method in the gas phase is preferable as the producing method of the inorganic fine particles of the invention. However, the control of the composition and that of the diameter of the composite metal oxide particle are difficult by the usual thermal decomposition method. Consequently, the method described in Japanese Patent Application Laid-Open Publication, hereinafter referred to as JP-A, Nos. 2005-218937 and 2005-305202 is preferably applied, in which a stream of raw material gas containing the raw material of the fine particles and a stream of reaction gas covering the raw material gas stream are flown into a reaction space so that the particles are formed at the circumference portion of the raw material gas stream by the thermal treatment, and the formed particles are cooled by the reaction to produced the fine particles.

In this method, the particles are formed by the chemical reaction between the raw material gas stream and the reaction gas stream, and the resulted particles are cooled to produce the fine particles. Therefore, the composition of the fine particle to be produced can be controlled by changing the kind of the reaction gas constituting the reaction gas stream.

The concentration of the raw material gas is preferably made as lower as possible within the range in which the production efficiency is not lowered, since the inorganic fine particles having small diameter and narrow diameter distribution are required in the invention. When large particles are undesirably formed according to the production condition, the large particles can be removed by known classifying apparatus on the occasion of the production or after the recovering of the particles. The classification method includes a method for removing the large particles by difference of the specific gravity or electric force and a method for removing the large particles dispersed in a solvent by filtration, and a method by treating the aerosol by a differential mobility analyzer (DMA) is preferably used.

The inorganic fine particles of the invention are **characterized in that** the surface of which is modified by an organic compound.

The method of the modification is nor specifically limited, and any known methods can be applied. For example, a method using phosphoric acid, sulfuric acid, an organic acid such as a carboxylic acid, a surface treatment by a surface treating agent such as a coupling agent and a surface treatment by polymer grafting or mechano-chemical means are applicable.

As the surface treatment agent to be used for surface modification of the inorganic fine particles, a silane coupling agent, silicone oil, and titanate type, aluminate type and zirconate type coupling agents are cited. The coupling agent can be suitably selected according to the kind of the inorganic fine particles and the curable resin for dispersing the inorganic fine particles, which is not limited to the above-mentioned. Two or more treatments may be applied simultaneously or separately. In concrete, vinylsilazane, trimethylchlorosilane, dimethyldichlorosilane, methyltrichlorosilane, trimethylalkoxysilane, dimethyldialkoxysilane, methyltrialkoxysilane and hexamethyldisilazane are cited as example of the silane type surface treating agent, and trimethylmethoxysilane, dimethyldimethoxysilane and hexamethyldisilazane are preferably usable.

As the silicone oil type treating agent, a straight silicone oil such as dimethylsilicone oil, methylphenyl-silicone oil and a modified silicone oil such as methylhydrogen silicone oil, amino-modified silicone oil, epoxy-modified silicone oil, carboxyl-modified silicone oil, carbinol-modified silicone oil, methacryl-modified silicone oil, mercapto-modified silicone oil, phenol-modified silicone oil, single end reaction-modified silicone oil, heterofunctional group-modified silicone oil, polyether-modified silicone oil, methylstyryl-modified silicone oil, alkyl-modified silicone oil, higher fatty acid-modified silicone oil and fluorine-modified silicone oil are usable.

These treating agents may be suitably diluted for use by a solvent such as hexane, toluene, methanol, ethanol, acetone and water.

As the method of surface modification by the surface treating agent, a wet-heating method, a wet-filtration method, a dry-stirring method, an integral blend method and a granulating method are cited. When the fine particles having a diameter of not more than 50 nm are treated, the dry-stirring method is preferably applied from the viewpoint of inhibiting coagulation of the particles, though the method is not limited to it.

These surface treating agents may be used singly or in combination of two or more kinds thereof. The properties of the surface treated inorganic fine particles are differed sometimes depending on the used surface treating agent and the affinity of the inorganic fine particles with the curable resin to be used on the occasion of preparing the resin composition can be made by selection of the surface treating agent. The ratio of the surface treating agent to the surface modified inorganic fine particles is preferably from 10 to 99% by weight and more preferably from 30 to 98% by weight though the ratio is not specifically limited.

### (2) Curable resin

The curable resin to be used in the invention is a resin curable by irradiation of UV rays or electron rays, or heating treatment. As the curable resin, one can be used without any limitation as long as the resin can form a transparent resin composition by curing a mixture of the resin before curing and the inorganic fine particles. For example, epoxy resin, vinyl ester resin, silicone resin, acryl resin and allyl ester resin are cited. The curable resin may be an active radiation curable resin capable of being cured by irradiation of UV rays or electron rays or a heat curable resin capable of being cured by heating treatment, for example, the following resins are preferably usable.

### (2.1) Silicone resin

Silicone type resin is a polymer having a main chain of a siloxane bond -Si-O-, which is constituted by alternatively bonded silicon atoms and oxygen atoms.

As the silicone resin, a silicone type resin composed of designated amount of polyorganosiloxane resin is usable; cf. JP-A-6-9937, for example.

As the thermally curable polyorganosiloxane resin, one capable of forming a three dimensional network structure by continuous hydrolysis-dehydration condensation reaction is usable without any specific limitation, which is usually cured by heating at high temperature for long time and difficultly re-softened by heating after once cured.

Such the polyorganosiloxane resin contains a constitution unit represented by the following Formula A, and the shape of which may be any of chain, cyclic and net-like.

Formula A ((R₁) (R₂)SiO)ₙ

In the above Formula A, R₁ and R₂ are each a substituted or unsubstituted mono-valent hydrocarbon group, they may be the same as or different from each other. Concrete examples of such the groups include an alkyl group such as a methyl group, an ethyl group, a propyl group and a butyl group, an alkenyl group such as a vinyl group and an allyl group, an aryl group such as a phenyl group and a tolyl group, a cycloalkyl group such as a cyclohexyl group and a cycloctyl group, groups formed by substituting the hydrogen atom bonded with the above groups by a halogen atom, a cyano group or an amino group, such as chloromethyl group, 3,3,3-trifluoropropyl group, cyanomethyl group, γ-aminopropyl group and N-(β-aminoethyl)-γ-aminopropyl group. R₁ and R₂ may be a group selected from a hydroxyl group and an alkoxyl group. In Formula A, n is an integer of 50 or more.

The polyorganosiloxane resin is usually used in a dissolved state in a hydrocarbon type solvent such as toluene, xylene and a petroleum solvent or a mixture of the hydrocarbon type solvent and a polar solvent. Plural kinds of the resin may be combined within the range in which they can be dissolved with together.

Known production methods may be applied for producing the polyorganosiloxane resin without any limitation. For example, the polyorganosiloxane resin can be obtained by hydrolysis or alcoholysis of single kind or a mixture of two or more kinds of organohalogenosilane. The polyorganosiloxane resin usually contains a hydrolysable group such as a silanol group and an alkoxyl group in a content of from 1 to 10% by weight in terms of silanol group.

Such the reaction is usually made in the presence of a solvent capable of dissolving the organohalogenosilane. The polyorganosiloxane resin also can be obtained by a method in which a straight chain organosiloxane having a hydroxyl group, an alkoxy group or a halogen atom at the terminal of molecular chain is co-hydrolyzed together with organotrichlorosilane to form block copolymer. Thus obtained polyorganosiloxane resin usually contains remaining HCl, and one containing not more than 10 ppm, preferably not more than 1 ppm, of HCl is preferably used in the composition of the embodiment of the invention since such the resin has satisfactory storage stability.

### (2.2) Epoxy resin

An alicyclic epoxy resin such as 3,4-epoxychrolohexylmethyl-3' ,4'-cyclohexylcarboxylate, cf. WO 2004/031257, can be used. Furthermore, epoxy resin containing a spiro group and chain aliphatic epoxy resin also can be used.

### (2.3) Curable resin having adamantine skeleton

The following can be used: 2-alkyl-2-adamantyl (meth)acrylate (Cf. JP-A-2002-193883), 3,3'-dialkaxy-carbonyl-1,1-adamantane (cf. JP-A-2001-253835), 1,1'-adamantane compounds (cf. USP No. 3,342,880), tetradamantane (cf. JP-A-2006-169117), a curable resin having an adamantine skeleton with no aromatic ring such as 2-alkyl-2-hydroxyadamantane, di-t-butyl 1,3-adamantane-dicarboxylate (cf. JP-A-2001-322950), bis(hydroxyphenyl)-adamantane compounds and bis(glycidyloxyphenyl)adamantine (cf. JP-A-11-35522 and JP-A-10-130371).

### (2.4) Resin containing allyl ester compound

The following are preferably usable: Bromine-containing (meth)acryl allyl ester containing no aromatic ring, cf. JP-A-2003-66201, Allyl methacrylate, cf. JP-A-5-286896, allyl ester resin, cf. JP-A-5-286896, allyl ester resin, cf. JP-A-5-286896 and 2003-66201, copolymer of an acrylic acid ester and an epoxy group-containing unsaturated compound, cf. JP-A-2003-128725, acrylate compound, cf. JP-A-2003-147072, and acryl ester compound, cf. JP-A-2005-2064.

### (3) Production of optical device

### (3.1) Preparation of optical resin material

On the occasion of production of the optical device of the invention, the optical resin material to be the raw material of the optical device is prepared at first.

The resin material may be prepared by mixing the curable resin dissolved in a solvent and the inorganic fine particles and then removing the organic solvent or by adding the inorganic fine particles into the monomer and then polymerizing the monomer. The resin material may be also prepared by dissolving oligomer formed by partial polymerization of the monomer or low molecular polymer, and adding and mixing the inorganic fine particles.

The method in which the inorganic fine particles are added into the monomer and then the monomer is polymerized is preferred in the embodiment of the invention, and a method is particularly preferred in which the viscous liquid of the mixture of the monomer and the inorganic fine particles is kneaded by a kneader. On this occasion, it is important to control the viscosity so that dispersion of the inorganic fine particles in the monomer is optimized. As the method for viscosity controlling, control of the particle diameter, surface condition or adding amount of the inorganic fine particles, and addition of a solvent or a viscosity controlling agent, are cited. As to the inorganic fine particles relating to the invention, the suitable kneaded state can be obtained since the surface modification of the inorganic fine particles can be easily provided depending on the structure thereof.

As the apparatus which can be used for the kneading, a closed kneading apparatus such as Labo Plastmill, Brabender, Banbury mixer, kneader and roller, and a batch type kneading apparatus can be cited. A continuous type kneading apparatus such as a single-axis extruder and a double-axis extruder are also usable.

The inorganic fine particles may be added in a powdered or coagulated state when the kneader is used for making them composite. The addition also can be carried out in a dispersed state in a liquid. When the addition is carried out in the dispersed state in the liquid, deaeration is preferably applied.

When the inorganic fine particles are added in the dispersed state in the liquid, it is preferable that the coagulated particles are previously dispersed until the state of primary particles. Various types of dispersing apparatus are usable for dispersing and a beads mill is particularly preferred. Various materials are usable for the beads and the size of the beads is preferably small, and one having a diameter of from 0.001 to 0.1 mm is particularly preferred.

The inorganic fine particles are preferably added in the surface treated state, and a procedure such as integral blend can be applied, in which the surface treating agent and the inorganic fine particles are simultaneously added for composing with the curable resin.

### (3.2) Formation of optical resin material

For curing the optical resin material composed of the composite of the inorganic fine particles and the curable resin, the resin composition is filled into a light transmittable mold or coated on a substrate and exposed to irradiation of UV rays and electron rays when the curable resin is curable by UV rays and electron rays. When the curable resin is the heat curable resin, the resin material can be cured and formed by forming by press forming, transfer forming, injection forming, extrusion forming and then heating.

Particularly, it is preferred to form the heat curable resin by the extrusion forming method. The extrusion forming method is suitable for forming the optical device such as the lens since spherical or non-spherical optical surface and fine structure on the optical surface can be formed by this method. The method is particularly preferred in the invention, in which the viscous liquid composed of the monomer solution and the inorganic fine particles are kneaded and then injected into the metal mold.

The formed product can be used in various shapes such as a shape of sphere, stick, plate, column, cylinder, tube, fiber, film and sheet, and is excellent in the low birefringence index, transparency, mechanical strength, heat resistivity and low water absorbability, and suitably applied as various optical parts.

Examples of the use of the products include optical lenses and optical prisms such as lenses of camera in image taking systems, microscopes, endoscopes and telescopes; entire light transmittable lenses such as lenses of glasses; pickup lenses for optical discs such as CD, CD-ROM, WORM (write once read many optical discs), MO (rewritable optical disc; photo-magnetic disc), MD (mini-disc) and DVD (digital versatile disc); lenses for laser scanning systems such as an fθ lens of laser beam printers and a sensor lens, and a prism lens of finder system of cameras.

As the use for the optical disc, CD, CD-ROM, WORM (write once read many optical discs), MO (rewritable optical disc; photo-magnetic disc), MD (mini-disc) and DVD (digital versatile disc) are cited. Optical uses other than the above include light conduction plates of liquid crystal displays; optical films such as polarization films, retardation films and light scattering films; light diffusion palates; optical cards; and substrates of liquid crystal displaying elements.

### (4) Properties of optical device resin material

The feature of the optical resin material is that the thermal variation ratio (dn/dT) of the refractive index is small. Here, dn/dT as the index of the thermal variation ratio of the refractive index shows that the refractive index of the optical resin material (n) is varied in the ratio of dn/dT regarding the variation of the temperature (T). The value of dn/dT can be determined by measuring the refractive index at various temperature points and reading the variation ratio of the refractive index as the temperature variation.

The method for measuring the refractive index can be selected from an ellipsometry method, spectral reflectance method, optical waveguide method, Abbe method and minimum declination method according to the shape of the optical resin material.

In the optical resin materials of the invention, the dn/dT is preferably within the range of from 0 to 9.0 x 10⁻⁵ and more preferably from 0 to 5.0 x 10⁻⁵, in the absolute value of |dn/dT|. The dn/dT is preferably within the above range in the entire wavelength region, and also preferably that the dn/dT is within the above range in the wavelength region to be applied in the practical use of the optical device since the optical element superior in the thermal stability for the usual device can be provided.

The optical resin material of the invention is preferably transparent in the visible wavelength region. The transparency in the visible wavelength region of the optical resin material of the invention at a light passing length of 3 mm is usually not less than 60%, preferably not more than 70%, more preferably not less than 80%, and most preferably not less than 90%. The measurement of the transparency is carried out by a test according to ASTM D-1003 (thickness of 3 mm) . Here, the "visible wavelength region" means a wavelength region of from 400 to 650 nm.

The refractive index of the optical resin material of the invention is decided by the combination of the resin and the inorganic fine particles, and it is preferred in usual that the refractive index is raised by selecting the inorganic fine particles higher in the refractive index than the resin. In concrete, the range of approximately from 1.45 to 2.0 is preferable and that of from 1.49 to 1.7 is more preferable.

The optical resin material of the invention is a material superior in the optical properties, which has low temperature dependency of refractive index and high transparency and is excellent in the suitability to the shape forming process. The optical resin material having both of such the superior optical properties and the processing suitability cannot be attained by the usually disclosed materials. It is considered that the combination of the specified resin and the specified inorganic fine particles contributes to such the properties.

### EXAMPLES

The invention is described bellow referring examples, though the invention is not limited to the examples.

### (1) Preparation of inorganic fine particles

Inorganic fine particles 1 to 12 were prepared by the following procedures.

### [Preparation of inorganic fine particles 1]

A mixed liquid composed of 1,368 g of tetramethoxysilane (TMOS) and 229.4 g of methanol, and a mixture liquid composed of 643.2 g of purified water and 104.8 g of 26%-ammonia water were dropped to a mixture liquid composed of purified water of 463.1 g, 104.8 g of 26%-ammonia water and 4,255.0 g methanol, spending 150 minutes while holding the temperature at 25 °C. Then a mixture liquid composed of 5,969 g of titanium tetraisopropoxide and 150 g of isopropanol was added spending 100 minutes to obtain silica/titania mixing sol. The sol was subjected to distillation by heating under atmospheric pressure and purified water was dropped while the distillation so that the volume was constantly held. The dropping of the water was finished at a time when it is confirmed that the temperature at the tower top was reached at 100 °C and the pH become not more than 8 to obtain fine particle dispersion.

Further, 15.4 g of methyltrimethoxysilane was added and stirred for 1 hour and then refluxed for 2 hours. After that, the resultant liquid was subjected to distillation by heating under atmospheric pressure and methyl ethyl ketone was dropped while the distillation so that the volume was constantly held. The dropping of the methyl ethyl ketone was finished at a time when it is confirmed that the temperature at the tower top was reached at 79 °C and the moisture content become to not more than 1.0 %. After cooling by room temperature, the liquid was precisely filtered by a 3 µm membrane filter to obtain methyl ethyl ketone dispersed silica sol.

As a result of TEM observation, the average particle diameter in terms of volume (particle diameter) was 13 nm. It was confirmed by the IR measurement that an absorption peak caused by silica is at 1,098 cm⁻¹. It was further confirmed that the particle had a composition in which Si and Ti were homogeneously dispersed by composition analysis of the cross section of the particle by TEM/EDX, and that the particle was amorphous composite oxide particle having no clear peak showing crystal structure in XRD measurement.

### [Preparation of Inorganic fine particles 2]

A raw material gas containing polydimethylsiloxane and tetra(2-ethylhexyl)titanate in an SiO₂/TiO₂ weight ratio of 3/1 by using NANOCREATOR, manufactured by Hosokawa Micron Corp. Stream of the above prepared raw material gas and oxygen gas were introduced into a reaction space with high temperature atmosphere and made react to prepare Inorganic fine particles 2 in a white fine powder state.

The result of TEM observation of the particles, the presence of the absorption peak caused by silica measured by IR measurement, the result of composition analysis of cross section of the particle by TEM/EDX, and the result of crystal structure analysis by XRD measurement are listed in Table 1. According to these results, Inorganic fine particles 2 was a particle composed of amorphous silica in which titanium oxide crystals were homogeneously dispersed.

### [Preparation of Inorganic fine particles 3 to 7]

Inorganic fine particles 3 to 7 each in a state of white fine powder were prepared in the same manner as in Inorganic fine particles 2 except that in each of which a mixture solution of polydimethylsiloxane, ethylacetoacetate aluminum di-normal-butylate and aluminum mono-n-butoxydiethylacetoacetic acid ester was prepared so that the weight ratio of Al₂O₃ was made to as described in Table 2, was used as the raw material gas stream.

Evaluation results of thus prepared inorganic fine particles are listed in Table 1. According to these results, Inorganic fine particles 3 was a particle having a core/shell structure composed of an alumina crystal core being at the central portion and amorphous silica rounding the alumina core. Inorganic fine particles 4 to 6 were each a particle composed of alumina crystals homogeneously dispersed in amorphous silica. In Inorganic fine particles 7, presence of amorphous silica could not confirmed and the particle was a particle composed of a heterogeneous mixture of alumina crystals and aluminum silicate crystals.

### [Preparation of Inorganic fine particles 8]

Inorganic fine particles 8 was prepared in the same manner as in Inorganic fine particles 2 except that a solution of polydimethylsiloxane and zinc compound, which was prepared so that the weight ratio of ZnO was made to as described in Table 1, was used as the raw material gas stream.

Evaluation results of thus obtained particle are shown in Table 1. According to the results, Inorganic fine particles 8 was particles composed of alumina crystals homogenously dispersed in amorphous silica.

### [Preparation of Inorganic fine particles 9 and 10]

Inorganic fine particles 9 and 10 were prepared in the same manner as in Inorganic fine particles 2 except that in each of which a solution of polydimethylsiloxane and magnesium compound, which was prepared so that the weight ratio of MgO was made to as described in Table 1, was used as the raw material gas stream.

Evaluation results of thus obtained particles are shown in Table 1. According to the results, Inorganic fine particles 9 was particles composed of homogenous mixture of magnesium oxide crystals and magnesium silicate crystals. In Inorganic fine particles 10, presence of amorphous silica could not confirmed and the particles were particles composed of a heterogeneous mixture of magnesium oxide crystals and magnesium silicate crystals.

### [Preparation of Inorganic fine particles 11]

Inorganic fine particles 11 in a white powder state was prepared in the same manner as in Inorganic fine particles 2 except that a solution of octamethylcyclotetrasiloxane and zirconium 2-ethylhexanate, which was prepared so that the weight ratio of SiO₂ to ZrO₂ was made to 2:1, was used as the raw material gas stream.

Evaluation results of thus prepared inorganic fine particles are listed in Table 1. According to these results, Inorganic fine particles 11 was particles having a core/shell structure composed of an zirconia crystal core being at the central portion and amorphous silica rounding the zirconia core.

### [Preparation of Inorganic fine particles 12]

Aluminum Oxide C, manufactured by Nippon Aerosil Co. Ltd., was referred to as Inorganic fine particles 12, and results of the same evaluation were shown in Table 1.

### (Determination of composition, particle diameter and metal oxide content)

The above Inorganic fine particles 1 to 12 were subjected to TEM observation and the average particle diameter in terms of volume was determined. The content of the metal oxide was determined according to the composition analysis by TEM/EDX. Furthermore, the dispersing state of the silica and the metal oxide was confirmed based on the presence of the peak showing the crystal structure by the XRD measurement. The results are shown in Table 1.

### (Measurement of refractive index)

Each of the above Inorganic fine particles 1 to 12 was dispersed in solvents different from each other in the refractive index, which were prepared by using 1,3-dichloropropane, methyl salicylate, 1-bromonaphthalene and diiodomethane. The refractive index np of each of the particles was determined based on the refractive index of the solvent forming transparent dispersion. The results are shown in Table 1.

### (Composition analysis by TEM/EDX)

Each of Inorganic fine particles 2, 4, 5, 6, 8 and 9 was subjected to the composition analysis by TEM/EDX at 10 or more points on the cross section of the particle. As the results of that, the variation of the composition between the measuring points was 10% or less.

**Table 1**

| | Composition | Particle (nm) | Presence of IR absorption caused by silica | Crystal structure by XRD | Content of metal oxide other than silica | Refractive index np |
|---|---|---|---|---|---|---|
| Inorganic Fine Particle 1 | Amorphous TiO_{2,} Amorphous SiO₂, Homogeneous | 13 | Yes | No | 75 weight-% | 1.65 |
| Inorganic Fine Particles 2 | Crystalline TiO₂, Amorphous SiO₂, Homogeneous | 25 | Yes | TiO₂ | 25 weight-% | 1.61 |
| Inorganic Fine Particles 3 | Crystalline Al₂O₃ core, Amorphous SiO₂ shell | 59 | Yes | Al₂O₃ | 15 weight-% | 1.48 |
| Inorganic Fine Particles 4 | Crystalline Al₂O₃, Amorphous SiO₂, Homogeneous | 40 | Yes | Al₂O₃ | 30 weight-% | 1.50 |
| Inorganic Fine Particles 5 | Crystalline Al₂O₃, Amorphous SiO₂, Homogeneous | 25 | Yes | Al₂O₃ | 44 weight-% | 1.53 |
| Inorganic Fine Particles 6 | Crystalline Al₂O₃, Amorphous SiO₂, Homogeneous | 45 | Yes | Al₂O₃ | 60 weight-% | 1.57 |
| Inorganic Fine Particles 7 | Crystalline Al₂O₃, crystalline Al₂Si₂O₈, Heterogeneous | 98 | No | Al₂O₃ Al₂Si₃O₈ | 85 weight-% | 1.59 |
| Inorganic Fine Particles 8 | Crystalline ZnSiO₄, Amorphous SiO₂, Homogeneous | 35 | Yes | ZnSiO₄ | 40 weight-% | 1.55 |
| Inorganic Fine Articles 9 | Crystalline MgSiO₄, Amorphous SiO₂, Homogeneous | 15 | Yes | MgSiO₄ | 40 weight-% | 1.58 |
| Inorganic Fine Particles 10 | Crystalline MgO, Crystalline MgSiO₄, Homogeneous | 28 | No | MgO MgSiO₄ | 70 weight-% | 1.65 |
| Inorganic Fine Particles 11 | Crystalline ZrO₂ core, Amorphous SiO₂ shell | 25 | Yes | ZrO₂ | 33 weight-% | 1.59 |
| Inorganic Fine Particles 12 | Crystalline Al₂O₃, Homogeneous | 13 | No | Al₂O₃ | 100 weight-% | 1.67 |

### (2) Preparation of surface treated inorganic fine particles

Inorganic fine particles 1 to 12 were each subjected to the following surface modification.

To each of the above inorganic fine particles having been dried under argon atmosphere, 30% by weight of hexamethyldisilazane, HMDS3 manufactured by Shin-Etsu Chemical Co., Ltd., was added and the mixture was heated by 200 °C for 60 minutes while stirring for making react to obtain surface modified inorganic fine particles modified by the organic silane compound on the surface. Thus obtained inorganic fine particles were each referred to as Inorganic fine particles 1A to 12A, respectively.

Three grams of Inorganic fine particles 5 was put into 100 g of THF and fully stirred and treated by a ultrasonic dispersing apparatus for 40 minutes, and then 0.2 g of sodium n-dodecylphosphate was added and the particles were treated by 60 minutes by the ultrasonic dispersing apparatus to obtain the inorganic fine particles modified on the surface by the organic phosphoric acid. Thus obtained fine particle was referred to as Inorganic fine particles 5B.

### (3) Preparation of composite of surface treated inorganic fine particles and curable resin

### [Preparation of Sample 1]

Thirty nine grams of 1-adamantyl methacrylate prepared according to JP-A-2002-193883 as the heat curable resin, 21 g of surface treated Inorganic fine particles 1A as the inorganic fine particles, 0.1 g of a phenol type antioxidant, IRGANOX 1010 manufactured by Ciba Specialty Chemicals, as an antioxidant, and 0.05 g of 1,1-bis(trbutylperoxy)-3,3,5-trimethylcyclohexane, PERHEXA 3M-95 manufactured by NOF Corp., as a radical polymerization initiator, were mixed and dispersed by using a table-top type three roller mill, RM-1 manufactured by Irie Shokai Co., Ltd. The resulted dispersion was poured into a mold having a thickness of 3 mm and then cured at 110 °C for 1 hour in an oven to prepare Sample 1.

### [Preparation of Samples 2 to 12]

Dispersions were prepared in the same manner as in Example 1 except that the kind and amount of the surface treated inorganic fine particles were changed as shown in Table 2. The dispersions were each poured into the mold having a thickness of 3 mm in the same manner as above, and cured at 110 °C in the oven. The curing time was controlled as to each of the samples since the curing rate was different from each other. Thus obtained cured products were referred to as Samples 2 to 12.

### [Preparation of Samples 13 to 15]

To silicone type resin, Part B of Silicone SR7010 manufactured by Toray Dow Corning Co., Ltd., 30% by volume of surface treated Inorganic fine particles 5A was added. Then Part A of SR7010 was mixed and dispersed by the three roller mill, RM-1 manufactured by Irie Shokai Co., Ltd. The resulted dispersion was poured into the mold having a thickness of 3 mm and cured by heating at 150 °C for 1 hour and further cured at 150 °C for 2 hours to prepare Sample 13. Samples 14 to 15 were prepared in the same manner except that the inorganic fine particles were only changed.

### [Preparation of Sample 16]

Thirty nine grams of 1-adamantyl methacrylate prepared according to JP-A-2002-193883 as the heat curable resin, 0.1 g of a phenol type antioxidant, IRGANOX 1010 manufactured by Ciba Specialty Chemicals, as an antioxidant, and 0.05 g of 1,1-bis(t-butylperoxy)-3,3,5-trimethylcyclohexane, PERHEXA 3M-95 manufactured by NOF Corp., as a radical polymerization initiator, were mixed and poured into a mold having a thickness of 3 mm and then cured at 110 °C for 1 hour in a oven to prepare comparative Sample 16 containing no inorganic fine particles.

### [Preparation of Sample 17]

Part A and Part B of Silicone SR7010, manufactured by Toray Dow Corning Co., Ltd., were mixed and poured into the mold having a thickness 3 mm and cured for 1 hour at 150 °C and further cured by heating at 150 °C for 2 hours to prepare comparative Sample 17 containing no inorganic fine particles.

### (Valuation of refractive index)

The refractive index at a wavelength of 588 nm of each of the Samples 1 to 17 was measured by an automatic refractometer KRP-200, manufactured by Kalnew Optical Industry Co., Ltd., at various temperatures within the range of from 10 °C to 60 °C. Thus obtained refractive index nd25 at 25 °C and temperature variation ratio of refractive index dn/dT are listed in Table 2.

### (Measurement of transmittance)

The light transmittance of each of Samples 1 to 17 having a thickness of 3mm was measured by Turbidity Meter T-2600DA, manufactured by Tokyo Denshoku Co., Ltd. Thus measured value was referred to as Transmittance A (%) . Then the samples were subjected to accelerated aging by standing for 48 hours at a condition of 55°C and 80% RH, and the transmittance of each of the samples was measured. Thus measured value was referred to as Transmittance B (%). The sample having a transmittance of not more than 80% was judged as not suitable for the optical device. The obtained results are listed in Table 2.

**Table 2**

| | Curable resin | | Surface treated inorganic fine particles | | | | Optical resin material | | | | Remarks |
|---|---|---|---|---|---|---|---|---|---|---|---|
| | Kind | Refractive index nh | Kind | Refractive index np | Average particle diameter (nm) | Content (volume-%) | dn/dT (10⁻⁶/K) | Refractive index nd25 | Transmittance A | Transmittance B | |
| Sample 1 | *1 | 1.51 | 1A | 1.65 | 13 | 20 | -85 | 1.57 | 83% | 68% | Comparative |
| Sample 2 | *1 | 1.51 | 2A | 1.61 | 25 | 20 | -60 | 1.54 | 84% | 82% | Inventive |
| Sample 3 | *1 | 1.51 | 3A | 1.48 | 59 | 20 | -74 | 1.49 | 75% | 75% | Comparative |
| Sample 4 | *1 | 1.51 | 4A | 1.51 | 40 | 20 | -65 | 1.51 | 93% | 90% | Inventive |
| Sample 5 | *1 | 1.51 | 5A | 1.53 | 25 | 20 | -47 | 1.52 | 90% | 90°C | Inventive |
| Sample 6 | *1 | 1.51 | 6A | 1.57 | 45 | 20 | -52 | 1.53 | 85% | 84% | Inventive |
| Sample 7 | *1 | 1.51 | 7A | 1.59 | 98 | 20 | -90 | 1.53 | 45% | 30% | Comparative |
| Sample 8 | *1 | 1.51 | 8A | 1.55 | 35 | 20 | -61 | 1.52 | 88% | 87% | Inventive |
| Sample 9 | *1 | 1.51 | 9A | 1.58 | 15 | 20 | -45 | 1.54 | 90% | 88% | Inventive |
| Sample 10 | *1 | 1.51 | 10A | 1.65 | 28 | 20 | -70 | 1.55 | 81% | 65% | Comparative |
| Sample 11 | *1 | 1.51 | 11A | 1.59 | 25 | 20 | -60 | 1.53 | 80% | 80% | Inventive |
| Sample 12 | *1 | 1.51 | 12A | 1.67 | 13 | 20 | -75 | 1.58 | 63% | 55% | Comparative |
| Sample 13 | Silicone | 1.53 | 5A | 1.53 | 25 | 30 | -50 | 1.53 | 89% | 88% | Inventive |
| Sample 14 | Silicone | 1.53 | 5B | 1.53 | 25 | 30 | -62 | 1.53 | 84% | 82% | Inventive |
| Sample 15 | Silicone | 1.53 | 7A | 1.59 | 98 | 30 | -97 | 1.55 | 74% | 65% | Comparative |
| Sample 16 | *1 | 1.51 | - | - | - | 0 | -110 | 1.51 | 91% | 89% | Comparative |
| Sample 17 | Silicone | 1.53 | - | - | - | 0 | -120 | 1.53 | 90% | 86% | Comparative |

| | | | | | | | | | | | |
|---|---|---|---|---|---|---|---|---|---|---|---|
| *1: Adamantylmethacrylate | | | | | | | | | | | |

As is cleared by the results described in Table 2, the optical resin material of the invention is smaller in the temperature dependency of refractive index and higher in the clarity compared with the comparative resin material. It is also understood that the lowering in the transmittance caused by the accelerated aging treatment is very small in the optical resin material of the invention and the material is very useful for the resin material to be used for the optical device.

### Example 2

### (1) Preparation of optical device

### [Preparation of Optical Device 1]

1-andamantyl methacrylate, surface treated Inorganic fine particles 1A as the inorganic fine particles, phenol type antioxidant (IRGANOX 1010 manufactured by Ciba Specialty Chemicals) and 1,1-bis(t-butylperoxy)-3,3,5-trimethylcyclohexane (PERHEXA 3M-95) were mixed so that the content of the inorganic fine particles was made to 20% by volume. The resulted mixture was kneaded at 20 °C by POLYLABO SYSTEM manufactured by Eko Instruments Co., Ltd. The kneaded material was extruded into a metal mold by an injection forming machine at 110 °C and pressed at 150 °C for 3 minutes to prepare an optical element having the shape as shown in Fig. 1. The device was referred to as Optical Device 1.

### [Preparation of Optical Device 2]

Optical Device 2 was prepared in the same manner as in Optical Device 1 except that surface treated Inorganic fine particles 5 was used as the inorganic fine particles.

### [Preparation of Optical Device 3]

Preparation of Optical Device C was tried in the same manner as in Optical Device 1 except that the kneading and extrusion forming were carried out without addition of inorganic fine particles. However, the formation cannot be performed by the injection forming machine since the viscosity of the kneaded material is low.

### [Preparation of Optical Device 4]

A mixture solution of 1-andamantyl methacrylate, phenol type antioxidant (IRGANOX 1010 manufactured by Ciba Specialty Chemicals) and 1,1-bis(t-butylperoxy)-3,3,5-trimethylcyclohexane (PERHEXA 3M-95, manufactured by NOF Corp.) was poured into the metal mold and pressed at 110 °C for 1 hour to prepare Optical Device 4.

### [Preparation of Optical Device 5]

Thermoplastic alicyclic cycloolefin resin ZEONEX 340, manufactured by Nippon Zeon Corp., and surface treated Inorganic fine particles 5A were melted and kneaded at 200 °C. so that the content of the inorganic fine particles was made to 20% by volume. The kneaded material was formed by injection at 230 °C to prepare Optical Device 5 having the shape as shown in Fig. 1.

### (2) Evaluation of Optical Devices

Each of the above optical device samples was subjected to a reflowing test (peak temperature: 260 °C, treating time: a minutes) and the light transmittance and the variation of surface shape were measured before and after the reflowing treatment. The measured results are listed in Table 3. The "variation of surface shape" was difference of the surface shapes before and after the reflowing treatment measured by a three dimension measuring apparatus (UA3P, manufactured by Matsushita Electric Industrial Co., Ltd.).

**Table 3**

| Optical device | Composition | Forming method | Transmittance before reflowing test | Transmittance after ref lowing test | Surface shape variation | remarks |
|---|---|---|---|---|---|---|
| 1 | Heat-curable adamantlymethacrylate, Surface treated Inorganic Fine Particles 1A | Injection | 87% | 65% | 160nm | Comparative |
| 2 | Heat-curable adamantlymethacrylate, Surface treated Inorganic Fine Particles 5A | Injection | 90% | 85% | 1.9nm | Inventive |
| 3 | Heat-curable adamantlymethacrylate | Injection | Sample could not be formed | | | Comparative |
| 4 | Heat-curable adamantlymethacrylate | Press | 91% | 77% | 600nm | Comparative |
| 5 | Thermoplastic ZEONEX 340R, Surface treated Inorganic Particles 5A | Injection | 87% | 75% | 1.2µm | Comparative |

As is cleared by the results described in Table 3, Optical Device 2 of the invention is smaller in the lowering of the transmittance after the reflowing and considerably smaller in the surface shape variation after the reflowing compared with comparative Optical Devices 1 and 3 to 5, and it can be understood that Optical Device 5 is excellently useful as the optical device.

## Claims

1. In a transparent optical resin material comprising a curable resin containing inorganic fine particles surface-modified by an organic compound, the optical resin material wherein the inorganic fine particles comprise amorphous silica containing a metal oxide crystal and have an average diameter of from 1 nm to 50 nm.

2. The optical resin material described in claim 1, wherein the inorganic fine particles have substantially homogeneous composition.

3. The optical resin material described in claim 1 or 2, wherein the average refractive index of the inorganic fine particles is within the range of from 1.5 to 1.7.

4. The optical resin material described in any one claims 1 to 3, wherein the organic compound is an organic silane compound.

5. An optical device formed by using the optical resin material described in any one of claims 1 to 4.
